# EUROPEAN PATENT SPECIFICATION

(11) **EP 4 297 990 B1**
(45) Date of publication and mention of the grant of the patent: **20.08.2025**
(21) Application number: 21718569.3
(22) Date of filing: 13.04.2021
(51) Int. Cl.: B60L 53/36, B60L 53/37, B60L 53/16, G05D 1/00, F16F 1/373, H01R 13/00, A47L 9/28, H01R 13/631, H01R 24/38, H02J 7/00, F16F 9/04, H01R 24/58

(54) **DOCKING ASSEMBLY FOR AN ELECTRONIC DEVICE**
HALTEVERBINDUNG FÜR ELEKTRONISCHES GERÄT
ENSEMBLE D'ACCUEIL POUR DISPOSITIF ÉLECTRONIQUE

(43) Date of publication of application: 03.01.2024
(73) Proprietor: ANYbotics AG, 8050 Zürich (CH)
(72) Inventor: WATSUJI, Ayla, 8050 Zürich (CH); GÜNTHER, Fabian, 8180 Bülach (CH); FRIEDLI, Raphael, 5506 Mägenwil (CH); HUTTER, Ursin, 8006 Zürich (CH); GIRÁLDEZ GÁMEZ, Francisco, 8050 Zürich (CH); WULF, Maximilian, 8003 Zürich (CH); PAGNAMENTA, Marco, 8603 Schwerzenbach (CH)
(74) Representative: E. Blum & Co. AG
(86) International application number: PCT/EP2021/059511
(87) International publication number: WO 2022/218506

(56) References cited:
- WO-A1-2015/112355
- WO-A1-2016/119001
- DE-A1- 102019 129 436
- US-A1- 2021 050 688

## Description

### Technical Field

The invention relates in a first aspect to a docking assembly for charging a battery of an electronic device, in particular of a robot. The docking assembly comprises a first docking element and a second docking element. A second aspect relates to the first docking element advantageously comprising an elastic element. A third aspect relates to the second docking element. A fourth aspect of the invention refers to the elastic element. A fifth aspect refers to a method for docking the first docking element to the second docking element for charging a battery of an electronic device, in particular a robot.

### Background Art

Electronic devices and in particular robots are advantageously equipped with a battery as a power source. Therefore, the electronic device or robot is equipped with a docking socket to dock to a stationary docking port to recharge the battery.

A legged robot equipped with a battery might be able to walk on its own to a docking port to recharge its battery.

Such legged robots are very often used in rough terrains. Therefore, the docking socket might be contaminated with dirt or water at the time the battery of the robot needs to be recharged. The contamination might cause an issue for the recharging, since it might interrupt the electrical connection between the docking socket and the docking port.

There are many challenges addressed in regard of such docking assemblies comprising a docking socket and a docking port.

WO 2015/112355 A1 discloses connector assembly for charging electric vehicles. The assembly can include optical alignment features for a robotic manipulation of the coupling.

DE 10 2019 129436 A1 discloses a device for conductive charging comprising a vehicle unit fixedly arranged on a vehicle and a robot unit arranged in a stationary but movable manner thereon.

### Disclosure of the Invention

The problem to be solved by the present invention is therefore to provide a robust docking assembly comprising a docking socket and a docking port.

The problem is solved by the subjects of the independent claims concerning a first, a second, a third, a fourth and a fifth aspect of the invention.

Unless otherwise stated, the following definitions shall apply in this specification:
The terms "a", "an", "the" and similar terms used in the context of the present invention are to be construed to cover both the singular and plural unless otherwise indicated herein or clearly contradicted by the context. Further, the terms "including", "containing" and "comprising" are used herein in their open, non-limiting sense. The term "containing" shall include both, "comprising" and "consisting of".

A **first aspect** of the invention refers to a docking assembly for charging a battery of an electronic device.

The electronic device is in particular a robot, a legged robot or an autonomous legged robot.

The docking assembly comprises a first docking element and a second docking element.

If the first element docks to the second docking element:
- a concave recess of the first docking element positively fits into a convex protrusion of the second docking element in a direction of a center axis of the concave recess,
- at least one electrical contact part integrated into a concave surface of the concave recess electrically connects to at least one electrical contact part integrated into a convex surface of the convex protrusion,
- a second surface of the first docking element is separated from the concave surface by means of a rim encircling the concave recess, and positively fits to a second surface of the second docking element in a direction of the center axis,
- at least one electrical contact part integrates into the second surface of the first docking element electrically connects to at least one electrical contact part integrated into the second surface of the second docking element.

In an advantageous embodiment of the invention, the first docking element is a docking port comprising a power supply and the second docking element is a docking socket integrated into the electronic device, for charging of the battery when the docking socket is docked to the docking port, or vice versa. Vice versa means that in a further embodiment, also the second docking element might be adapted to be the docking port and the first element might be the docking socket integrated into the electronic device.

In an advantageous embodiment, the docking port comprises a power supply and is configured to charge the battery of the electronic device, when the docking socket is docked to the docking port.

In particular, the docking port is configured as an independent module placed on the ground.

In particular, docking socket might be integrated into a bottom side of a torso of a legged robot.

Advantageously, a legged robot might walk towards a docking port if it needs to be recharged. The legged robot might detect the docking socket according to a method for docking the docking socket to the docking port above the docking port and estimate the pose for positioning itself in relation to the docking port, such that the docking socket is positioned directly above the docking port, such that a center axis of the convex protrusion is congruently aligned with the center axis of the concave recess. In a next step, the legged robot might lower the torso in a direction of the center axis of the convex protrusion towards the docking port, such that the docking socket docks to the docking port.

In particular, the term "convex" here refers to all possible shapes that protrude from the docking socket body. In particular, such a first convex surface might be the surface of a hemispherical-like shape or a cone that protrudes from the docking socket.

In particular, the term "concave" here refers to all possible shapes that form an recess or indentation into the docking port. Such a first concave surface of the docking port might have a hemispherical-like surface. Advantageously, the first concave surface is the surface of a cone-like shape.

In particular, the term "rim" here refers to a wall that protrudes from the first docking element and forms the at least one electrical contact part of the concave surface at the inner side of the wall and the at least one electrical contact part of the second surface of the first docking element at the outside of the wall.

In particular, the surface of the rim has at the outside the form of a truncated cone and/or at the inside the form of a hemisphere.

In particular the arrangement of the at least one electrical contact part of the concave surface at the inner wall of the rim and the arrangement of the at least one electrical contact part of the first surface of the first docking element at the outer wall of the rim allows to provide two different connections to the second docking element but at the same time to safe space, since the electrodes are arranged in a very compact way.

In a further advantageous embodiment of the invention, the at least one electrical contact part of the convex surface and the at least one electrical contact part of the second surface of the second docking element are arranged on the second docking element in a way that they face each other if not docking to the first docking element and that they face the concave surface at the inner side of the rim and the second surface of the first docking element at the outer side of the rim if docked to the first docking element. This arrangement safes space and is therefore very advantageous if the second docking element is integrated into a robot or electronic device.

In addition, the advantageous arrangement of the concave surface positively fitting to the convex surface allows to enable a stable connection, even though there might be contamination or residuals sitting on the first and/or second docking element. Advantageously, there is more than one electrical contact part integrated into the concave surface or convex surface to connect to each other. Even if one of the electrical contact parts is contaminated, the remaining electrical contact parts might still connect to each other and therefore provide a stable connection.

The first docking element comprises an elastic element with a geometry adapted to swivel the concave recess around a pivot point to compensate for the misalignment, if the second docking element docks to the first element while an angle α to the center axis. In particular an advantageous angle α is 20° ≥ α ≥ -20°.

In particular, the elastic element therefore enables a self-centering of the first and the second docking element in the process of docking to each other.

Therefore, the docking assembly is very robust in terms of alignment issues that might occur in the process of e.g. an autonomous robot trying to dock with a docking socket to a docking port. In particular, if the autonomous robot does not have a camera on the bottom side of its torso, it might not be able to precisely recognize the docking port. If the docking port corresponds to the first docking element and comprises the elastic element, the docking port is more robust to receive the docking socket, even if the docking angle is not very precisely in a direction of the center axis.

Furthermore, also if there is a lateral shift between the convex surface of the first docking element, e.g. the docking socket, and the second docking element, e.g. the port socket, the swivelling or pivoting of the elastic element allows the first element to still dock to the second docking element even though the misalignment of the docking direction.

In a further advantageous embodiment of the invention,
- the at least one electrical contact part of the concave surface and the electrical contact part of the convex surface are power electric contacts, and/or
- the at least one electrical contact part of the second surface of the first docking element and the at least one electrical contact part of the second surface of the second docking element are ground contacts, and/or
- a first center electric contact part integrated in the lowest area of the concave surface is connectable to a second center electric contact part integrated in the topmost area of the convex surface, wherein the first and the second center electric contact parts are signal contacts adapted to detect a contact between the first and the second docking element.

In an advantageous embodiment of the invention, the at least one electrical contact part of the concave surface and the electrical contact part of the convex surface have a power connection +60V > power connection > +40V, in particular +48V.

In a further advantageous example of the invention, the first center electric contact part and the second center electric contact part have a power connection of +20V > power connection center electric contcacts > +10V, in particular of +12V.

In an advantageous embodiment of the invention, the first and the second center electric contact parts get in contact if the first docking element docks to the second docking element, the docking is detected and the power supply for the at least one electrical contact part of the concave and convex surface activated. In particular, the activation happens with a time delay, to prevent electric shortages that might happen if the first and second docking element are misaligned but the power supply is still activated.

In an advantageous embodiment, the first and second center electrode only have contact if the at least one electrical contact part of the concave surface and the at least one electrical contact part of the convex surface are in contact and if the at least one electrical contact part of the second surface of the first docking element and the at least one electrical contact part of the second surface of the second docking element are in contact.

A **second aspect** of the invention refers to a first docking element for the docking assembly according to the first aspect of the invention.

Advantageously, the first docking element is a docking port for an electronic device or robot. Therefore, the first docking element comprises a power supply to provide power to charge the battery of an electronic device or robot.

In a further advantageous embodiment of the invention, the first docking element comprises one electrical contact part that is integrated into the concave surface and is adapted to electrically connect to at least two, further particular to at least four, of the electrical contact parts of the convex surface, if the first docking element is docked to the second docking element. In particular, the electrical contact part of the concave surface is adapted to electrically connect to all of the electrical contact parts of the convex surface.

In particular, the at least one electrical contact part of the concave surface extends over an area of the concave surface to form a contact ring.

In particular, the at least one electrical contact part of the concave surface extends over an area of the concave surface such that it forms a ring-like electrode, in particular with a shape of a truncated cone.

Further particular, the electrical contact part of the second surface of the first docking element has a ring or ring-like form, in particular has the geometrical shape of the surface of a truncated cone.

In a further advantageous embodiment of the second aspect, the at least one electrical contact part of the second surface of the first docking element encompasses the rim. In particular, the electrical contact part of the second surface of the first docking element is adapted to electrically connect to at least two, in particular at least four, very particular to each of the at least one electrical contact parts of the second surface of the second docking element, if the first docking element is docked to the second docking element.

In a further advantageous embodiment, the at least one electrical contact part of the concave surface is arranged at an inner surface of the circular rim encompassing the concave surface and the at least one electrical contact part of the second surface is arranged at an outer surface of the circular rim. The rim isolates the at least one electrical contact part of the concave surface from the at least one electrical contact part of the second surface.

In a further advantageous embodiment of the second aspect, the first docking element comprises the elastic element with a geometry adapted to swivel the concave recess around the pivot point.

In particular, the pivot point of the elastic element is arranged on the center axis in a direction towards the second docking element, if the second docking element docks to the first docking element, outside the first docking element.

In particular, the pivot point of the elastic element is arranged on the center axis in a direction beyond the concave surface.

Because of the arrangement of the pivot point, a center point of the concave recess or surface does not shift laterally while swivelling, but essentially remains at a fix position.

In a further advantageous embodiment of the invention, the first docking element comprises a first center electric contact part integrated at the lowest point of the concave surface.

In particular, the first center electric contact part is adapted to connect to a second electric contact part of the second docking element.

Advantageously, the first and second center electric contact parts are signal electric electrodes to identify the docking conditions between the first and second docking element. In particular, they only connect after the first and the second docking element have connected.

A **third aspect** of the invention refers to a second docking element for the docking assembly according to the first aspect of the invention.

The second docking element is advantageously a docking socket integrated into an electronic device or robot and adapted to dock to a docking port for recharging the battery of the device or robot.

In an advantageous embodiment of the third aspect, the second docking element comprises four electrical contact parts integrated into the convex surface, and/or four electrical contact parts integrated into the second surface of the second docking element.

In a further advantageous embodiment of the third aspect, the second docking element comprises a second center electric contact part integrated at the topmost point of the convex surface. In particular, the second center electric contact part is adapted to connect to a first center electric contact part of the first docking element.

A **fourth aspect** refers to an elastic element, in particular for the docking assembly according to the first aspect or the first docking element according to the second aspect of the invention.

The elastic element comprises at least three tube segments. Each tube segment links to two other tube segments by a bridge for forming a ring-like structure.

Each tube segment has a center axis. All of the center axes of the tube segments intersect with an axis of the ring-like structure at a point outside the ring-like structure.

An advantageous embodiment of the invention according to the fourth aspect has four tube segments.

In particular, the elastic element is made of a material polyurethane.

A **fifth aspect** of the invention refers to a method for docking the first docking element to the second docking element for charging a battery of an electronic device, in particular a robot.

The first docking element is a docking port and the second docking element is a docking socket integrated into the electronic device, or vice versa. Vice versa means that in a further embodiment, also the second docking element might be adapted to be the docking port and the first element might be the docking socket integrated into the electronic device.

The method comprises the steps of
- detecting the docking port with a camera of the electronic device,
- estimating the pose for positioning of the electronic device such that it docks with the docking socket to the docking port, and
- controlling the electronic device to adopt to the position for docking with the docking socket to the docking port.

Advantageously, the electronic device is an autonomous robot. Such an autonomous robot comprises a camera to detect the docking port if the docking port is arranged within the camera coverage of the camera.

If the camera detects the docking port, a logic unit of the robot estimates the pose that the robot needs to adopt to dock the docking socket to the docking port. The autonomous robot can then adopt the pose to dock the docking socket to the docking port.

Even if the pose is not adopted very precisely, the robot might dock with the docking socket to the docking port, if the docking port comprises an elastic element that compensates for misalignments of the docking socket.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
Fig. 1 shows schematic of a cross section of the docking assembly according to an advantageous embodiment of the first aspect of the invention;
Fig. 2 shows a schematic of a perspective view of a first docking element according to an advantageous embodiment of second aspect of the invention;
Fig. 3 shows a schematic of a perspective view of a second docking element according to an advantageous embodiment of the third aspect of the invention; and
Fig. 4 shows a schematic of a perspective view of an elastic element according to an advantageous embodiment according to a fourth aspect of the invention.

### Modes for Carrying Out the Invention

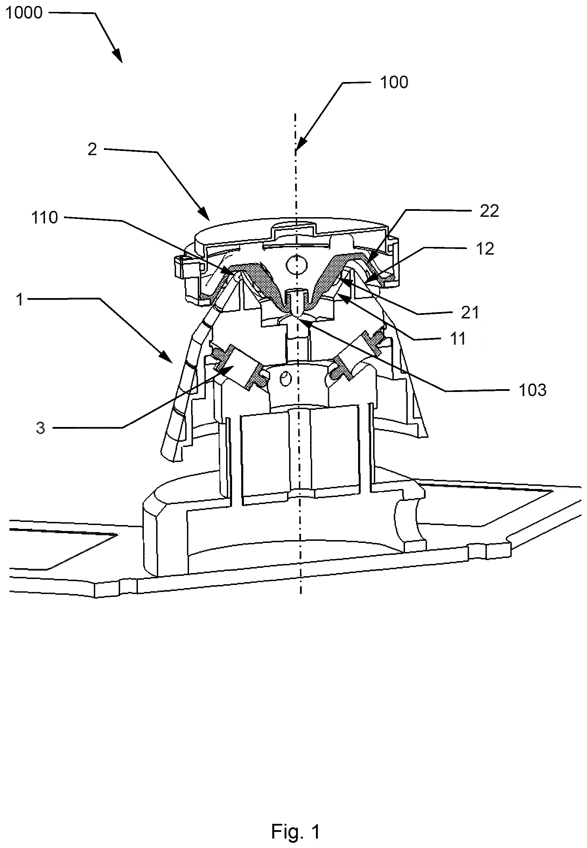

Fig. 1 shows a cross section of an advantageous embodiment of the docking assembly 1000. The docking assembly 1000 comprises a first docking element 1 and docking to a second docking element 2.

A concave recess in a direction of a center axis 100 of the first docking element 1 positively fits into a convex protrusion of the second docking element 2 in a direction of the center axis 100.

At least one electrical contact part 101 is integrated into a concave surface 11 of the concave recess to electrically connect to at least one electrical contact part 201 integrated into a convex surface 21 of the convex protrusion.

A second surface 12 of the first docking element 1 is separated from the concave surface 11 by means of a rim 110 encircling the concave recess. In addition, the second surface 12 is adapted to positively fit to a second surface 22 of the second docking element 2 in a direction of the center axis 100.

At least one electrical contact part 102 integrated into the second surface 12 of the first docking element 1 electrically connects to at least one electrical contact part 202 integrated into the second surface 22 of the second docking element 2.

In the advantageous embodiment of the docking assembly 1000 in Fig. 1, the first docking element 1 is a docking port and the second docking element 2 is a docking socket.

The docking port advantageously comprises a power supply and is configured to charge the battery of the electronic device or robot when a docking socket is docked to the docking port.

The docking socket advantageously is adapted to be integrated into the electronic device for charging of the battery when the docking socket docks to the docking port.

Further advantageously, the first docking element 1 comprises an elastic element 3 with a geometry adapted to swivel the concave recess around a pivot point if the second docking element 2 docks to the first docking element with an angle α to the center axis 100, to compensate for the misalignment of the second docking element 2. Advantageously, the angle α is 20° ≥ α ≥ -20°.

Advantageously, the pivot point of the elastic element 3 is arranged on the center axis 100 in a direction towards the second docking element 2, if the second docking element 2 docks to the first docking element 1, outside the first docking element 1.

Advantageously, the pivot point of the elastic element 3 is arranged on the center axis 100 in a direction beyond the concave surface 11.

In a further advantageous embodiment of the docking assembly 1000 in Fig. 1, the at least one electrical contact part 101 of the concave surface 11 and the at least one electrical contact part 201 of the convex surface 21 are power electric contacts. In particular they provide a high voltage power, in particular of above +40V, in particular +48V.

In a further advantageous embodiment of the docking assembly 1000 in Fig. 1, the at least one electrical contact part 102 of the second surface 12 of the first docking element 1 and the at least one electrical contact part 202 of the second surface 22 of the second docking element 2 are ground contacts.

In a further advantageous embodiment of the docking assembly 1000 in Fig. 1, the first docking element 1 comprises a first center electric contact part 103 integrated into the lowest area of the concave surface 11. This first center electric contact part 103 is connectable to a second center electric contact part 203 integrated into the topmost area of the convex surface 21.

The first 103 and the second 203 center electric contact parts are adapted to detect whether the second docking element 2 is docked to the first docking element 1. If the first center electric contact 103 connects to the second electric contact 203 the first docking element 1 docks to the second docking element 2 and the charging begins. If the first docking element docks to the second docking element, and only then, power is applied to the least one electrical contact part 101 of the concave surface 11 and the at least one electrical contact part 201 of the convex surface 21, for charging of the battery of the electronic device.

In an advantageous embodiment of the invention, the docking of the first docking element 1 to the second docking element 2 happens by means of a method for charging a battery of an electronic device according to the fifth aspect of the invention.

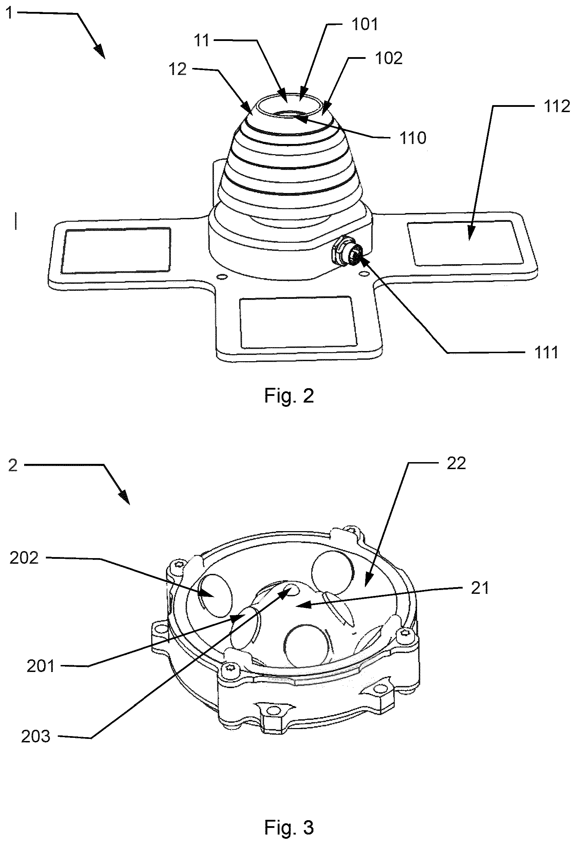

**Fig. 2** shows a perspective view of an embodiment of the first docking element 1. The first docking element 1 comprises at least one electrical contact part 101 integrated into the concave surface 11 and adapted to electrically connect to at least two of the electrical contact parts 201 integrated into the convex surface 21 if the first docking element 1 is docked to the second docking element 2. In particular, for an embodiment of the docking assembly as shown in Fig. 1, the at least one electrical contact part 101 of the concave surface 11 electrically connects to four electrical contact parts 201 of the convex surface 21.

In particular, an advantageous embodiment of the at least one electrical contact part 101 of the concave surface 11 extends over an area of the concave surface 11 such that it forms a ring-like electrode, as shown in Fig. 2. In particular, the ring-like electrode might have the geometrical shape of a surface of a truncated cone.

In a further advantageous embodiment of the first docking element 1, the at least one electrical contact part 102 of the second surface 12 encompasses the rim 110 and is adapted to electrically connect to each of the at least one electrical contact parts 202 integrated into the second surface 21 of the second docking element 2, if the first docking element 1 docks to the second docking element 2.

In particular, the electrical contact part 102 of the second surface 12 has a ring or ring-like form, in particular has the geometrical shape of the surface of a truncated cone.

In a further advantageous embodiment of the first docking element 1, the docking element 1 comprises an elastic element 3 (not visible from the outside). The geometry of the elastic element 3 is adapted to swivel or pivot the concave recess around a pivot point.

Advantageously, the pivot point of the elastic element 3 is arranged on the center axis 100 in a direction towards the second docking element 2, if the second docking element 2 docks to the first docking element 1 outside the first docking element 1.

Advantageously, the pivot point of the elastic element 3 is arranged on the center axis 100 in a direction beyond the concave surface 11.

Further advantageously, the first docking element 1 comprises a first center electric contact part 103 integrated into the lowest point or area of the concave surface 11. The center electric contact part 103 is not visible in the perspective view of the fist docking element 1 in Fig 2, but is visible in the cross-section view of the first docking element 1 in Fig. 1.

In particular, the center electric contact part 103 is adapted to connect to a second electric contact part 203 of the second docking element 2, if the first docking element 1 docks to the second docking element 2.

In particular, the center electric contact part 103 might be arranged within an opening in the lowest area of the concave surface 11.

Further advantageously, the first docking element 1, if embodied as a docking port, comprises further a power supply 111.

In addition, in a further advantageous embodiment of the first docking element 1, if embodied as a docking port, the first docking element 1 comprises marking surfaces 112. Such marking surfaces 112 might be recognized by an autonomous robot if it is looking for a docking port to dock to with its docking socket for charging the battery.

**Fig. 3** shows a perspective view of an embodiment of the second docking element 2.

In an advantageous embodiment as shown in Fig. 3, the second docking element 2 comprises four electrical contact parts 201 integrated into the convex surface 21 and/or four electrical contact parts 202 integrated into the second surface 22.

The advantageous embodiment of the second docking element 2 as shown in Fig. 3 comprises further a second center electric contact part 203 integrated at the topmost point of the convex surface 21.

In particular, the second center electric contact part 203 is adapted to connect to a first center electric contact part 103 of the first docking element 1, if the second docking element 2 docks to the first docking element 1.

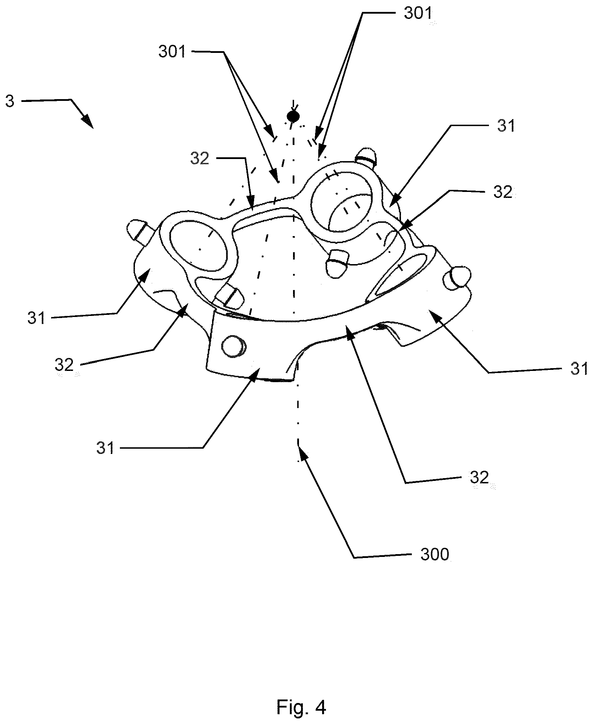

**Fig. 4** shows a perspective view of an embodiment of the elastic element 3.

In the advantageous embodiment of the elastic element 3 as shown in Fig. 4, the elastic element 3 comprises at least three tube segments 31, in particular here it comprises four tube segments 31, wherein each tube segment 31 links to two other tube segments 31 by a bridge 32 for forming a ring-like structure. Each tube segment 31 has a center axis 301. All center axes 301 of each of the tube segments 31 intersect in one point and intersect with an axis 300 of the ring-like structure at a point outside the ring-like structure. The intersection point of the center axes 301 is the pivot point of the elastic element 3.

### Reference Numbers

| | |
|---|---|
| First docking element | 1 |
| Concave surface | 11 |
| Second surface of first docking element | 12 |
| Center axis | 100 |
| Electrical contact in concave surface | 101 |
| Electrical contact in second surface of first docking element | 102 |
| Rim | 110 |
| Docking assembly | 1000 |
| Second docking element | 2 |
| Convex surface | 21 |
| Second surface of second docking element | 22 |
| Electrical contact in convex surface | 201 |
| Electrical contact in second surface of second docking element | 202 |
| Elastic element | 3 |
| Tube segment | 31 |
| Axis of ring-like structure of elastic element | 300 |
| Center axis of tube segment | 301 |

## Claims

1. Docking assembly (1000) for charging a battery of an electronic device, in particular a robot, comprising a first docking element (1) and a second docking element (2),
wherein when the first docking element (1) docks to the second docking element (2),
- a concave recess of the first docking element (1) is configured to positively fit into a convex protrusion of the second docking element (2) in a direction of a center axis (100) of the concave recess,
- at least one electrical contact part (101) integrated into a concave surface (11) of the concave recess electrically connects to at least one electrical contact part (201) integrated into a convex surface (21) of the convex protrusion, the docking assembly **characterized in that**
- a second surface (12) of the first docking element (1) is separated from the concave surface (11) by means of a rim (110) encircling the concave recess, and is configured to positively fit to a second surface (22) of the second docking element (2) in a direction of the center axis (100),
- at least one electrical contact part (102) integrated into the second surface (12) of the first docking element (1) electrically connects to at least one electrical contact part (202) integrated into the second surface (22) of the second docking element (2), and
wherein the first docking element (1) comprises an elastic element (3) with a geometry adapted to swivel the concave recess around a pivot point adapted for the second docking element (2) to dock to the first element (1) with an angle α to the center axis (100), adapted to compensate for the misalignment of the second docking element (2).

2. The docking assembly (1000) according to claim 1, wherein
- the first docking element (1) is a docking port comprising a power supply (111) and is configured to charge the battery of the electronic device when a docking socket is docked to the docking port,
- the second docking element (1) is a docking socket adapted to be integrated into the electronic device for charging of the battery when the docking socket is docked to the docking port.

3. The docking assembly (1000) according to one of the preceding claims, wherein the angle α is 20° ≥ α ≥ -20°.

4. The docking assembly (1000) according to one of the preceding claims, wherein
- the at least one electrical contact part (101) of the concave surface (11) and the electrical contact part (201) of the convex surface (21) are power electric contacts, and/or
- the at least one electrical contact part (102) of the second surface (12) of the first docking element (1) and the at least one electrical contact part (202) of the second surface (22) of the second docking element (2) are ground contacts, and/or
- a first center electric contact part (103) integrated in the lowest area of the concave surface (11) is connectable to a second center electric contact part (203) integrated in the topmost area of the convex surface (21), wherein the first (103) and the second (203) center electric contact parts are signal electric contacts and/or are adapted to detect a contact between the first and the second docking element.

5. First docking element (1) for the docking assembly (1000) according to claim 1 or 2.

6. The first docking element according to claim 5, wherein one electrical contact part (101) integrated into the concave surface (11) is adapted to electrically connect to at least two of the electrical contact parts (201) integrated into the convex surface (21) if the first docking element (1) is docked to the second docking element (2),
in particular, wherein the at least one electrical contact part (101) integrated into the concave surface (11) extends over an area of the concave surface to form a ring-electrode.

7. The first docking element (1) according to claim 5 or 6, wherein the at least one electrical contact part (102) integrated into the second surface (12) of the first docking element (1) encompasses the rim (110) is adapted to electrically connect to each of the at least one electrical contact parts (202) integrated into the second surface (21) of the second docking element (2) if the first docking element (1) docks to the second docking element (2).

8. The first docking element (1) according to one of claims 5 to 7, comprising an elastic element (3) with a geometry adapted to swivel the concave recess around a pivot point,
in particular, wherein the pivot point is located on the central axis (100) outside the first docking element (1) in a direction towards the second docking element 2, adapted for the second docking element 2 to dock to the first docking element 1 outside the first docking element 1.

9. The first docking element (1) according to one of claims 5 to 8, comprising a first center electric contact part (103) integrated at the lowest point of the concave surface (11),
in particular, the first center electric contact part (103) is adapted to connect to a second electric contact part (203) of the second docking element (2), if the first docking element (1) docks to the second docking element (2).

10. Second docking element (2) for the docking assembly (1000) according to one of claims 1 or 4.

11. The second docking element (2) according to claim 10, comprising
at least four electrical contact parts (201) integrated into the convex surface (21), and/or
at least four electrical contact parts (202) integrated into the second surface (22).

12. The second docking element (2) according to one of claims 10 to 11, comprising a second center electric contact part (203) integrated at the topmost point of the convex surface (21),
in particular, the second center electric contact part (203) is adapted to connect to a first center electric contact part (103) of the first docking element (1), if the second docking element (2) docks to the first docking element (1).

13. Elastic element (3) for the docking assembly according to claim 3 comprising at least three tube segments (31),
wherein each tube segment (31) links to two other tube segments (31) by a bridge (32) for forming a ring-like structure,
wherein center axes (301) of each of the at least three tube segments (31) intersect with an axis (300) of the ring-like structure at a point outside the ring-like structure.

14. Elastic element (3) according to claim 13 comprising four tube segments (31).

15. Method for docking a first docking element (1) according to one of claims 5 to 9 to a second docking element (2) according to one of claims 10 to 12 for charging a battery of an electronic device, in particular a robot,
wherein the first docking element(1) is a docking port and the second docking element (2) is a docking socket integrated into the electronic device,
or vice versa,
the method comprising the steps of
- detecting the docking port with a camera of the electronic device,
- estimating the pose for positioning of the electronic device such that it docks with the docking socket to the docking port, and
- controlling the electronic device to adopt to the position for docking with the docking socket to the docking port.

## Patentansprüche

1. Andockvorrichtung (1000) zum Laden einer Batterie eines elektronischen Gerätes, insbesondere eines Roboters, mit einem ersten Andockelement (1) und einem zweiten Andockelement (2),
wobei wenn das erste Andockelement (1) an das zweite Andockelement (2) andockt,
- eine konkave Ausnehmung des ersten Andockelements (1) derart ausgestaltet ist, dass sie formschlüssig in einen konvexen Vorsprung des zweiten Andockelements (2) in einer Richtung einer Mittelachse (100) der konkaven Ausnehmung passt,
- mindestens ein elektrisches Kontaktteil (101), das in eine konkave Oberfläche (11) der konkaven Ausnehmung integriert ist, mit mindestens einem elektrischen Kontaktteil (201), das in eine konvexe Oberfläche (21) des konvexen Vorsprungs integriert ist, elektrisch verbunden ist, wobei die Andockbaugruppe **dadurch gekennzeichnet ist, dass**
- eine zweite Oberfläche (12) des ersten Andockelements (1) von der konkaven Oberfläche (11) mittels einer die konkave Ausnehmung umgebenden Kante (110) getrennt ist und so konfiguriert ist, dass sie formschlüssig an eine zweite Oberfläche (22) des zweiten Andockelements (2) in einer Richtung der Mittelachse (100) passt,
- mindestens ein in die zweite Oberfläche (12) des ersten Andockelements (1) integriertes elektrisches Kontaktteil (102) mit mindestens einem in die zweite Oberfläche (22) des zweiten Andockelements (2) integrierten elektrischen Kontaktteil (202) elektrisch verbunden ist, und
wobei das erste Andockelement (1) ein elastisches Element (3) mit einer Geometrie umfasst, wobei die Geometrie ausgestaltet ist, die konkave Ausnehmung um einen Drehpunkt zu schwenken, derart, dass das zweite Andockelement (2) an das erste Element (1) mit einem Winkel α zur Mittelachse (100) andocken kann, um die Fehlausrichtung des zweiten Andockelements (2) auszugleichen.

2. Andockvorrichtung (1000) nach Anspruch 1, wobei
- das erste Andockelement (1) ein Andockport ist, der eine Stromversorgung (111) umfasst und so konfiguriert ist, dass er die Batterie des elektronischen Geräts auflädt, wenn eine Andockbuchse an den Andockport angedockt ist,
- das zweite Andockelement (1) eine Andockbuchse ist, die geeignet ist, in das elektronische Gerät integriert zu werden, um die Batterie aufzuladen, wenn die Andockbuchse an den Andockport angedockt ist.

3. Andockvorrichtung (1000) nach einem der vorhergehenden Ansprüche, wobei der Winkel α 20° ≥ α ≥ - 20° beträgt.

4. Andockvorrichtung (1000) nach einem der vorhergehenden Ansprüche, wobei
- das mindestens eine elektrische Kontaktteil (101) der konkaven Oberfläche (11) und das elektrische Kontaktteil (201) der konvexen Oberfläche (21) elektrische Leistungskontakte sind, und/oder
- das mindestens eine elektrische Kontaktteil (102) der zweiten Oberfläche (12) des ersten Andockelements (1) und das mindestens eine elektrische Kontaktteil (202) der zweiten Oberfläche (22) des zweiten Andockelements (2) Erdungskontakte sind, und/oder
- ein erstes zentrales elektrisches Kontaktteil (103), das in den untersten Bereich der konkaven Oberfläche (11) integriert ist, mit einem zweiten zentralen elektrischen Kontaktteil (203), das in den obersten Bereich der konvexen Oberfläche (21) integriert ist, verbindbar ist, wobei das erste (103) und das zweite (203) zentrale elektrische Kontaktteil elektrische Signalkontakte sind und/oder geeignet sind, einen Kontakt zwischen dem ersten und dem zweiten Andockelement zu erfassen.

5. Erstes Andockelement (1) für die Andockanordnung (1000) nach Anspruch 1 oder 2.

6. Erstes Andockelement nach Anspruch 5, wobei ein in die konkave Oberfläche (11) integriertes elektrisches Kontaktteil (101) dazu ausgebildet ist, mit mindestens zwei der in die konvexe Oberfläche (21) integrierten elektrischen Kontaktteile (201) elektrisch zu verbinden, wenn das erste Andockelement (1) an das zweite Andockelement (2) angedockt ist,
wobei sich insbesondere das mindestens eine in die konkave Oberfläche (11) integrierte elektrische Kontaktteil (101) zur Bildung einer Ringelektrode über einen Bereich der konkaven Oberfläche erstreckt.

7. Erstes Andockelement (1) nach Anspruch 5 oder 6, wobei das mindestens eine in die zweite Oberfläche (12) des ersten Andockelements (1) integrierte elektrische Kontaktteil (102), das die Kante (110) umschliesst, geeignet ist, mit jedem der mindestens einen in die zweite Oberfläche (21) des zweiten Andockelements (2) integrierten elektrischen Kontaktteile (202) elektrisch zu verbinden, wenn das erste Andockelement (1) an das zweite Andockelement (2) andockt.

8. Erstes Andockelement (1) nach einem der Ansprüche 5 bis 7, umfassend ein elastisches Element (3) mit einer Geometrie, die geeignet ist, die konkave Ausnehmung um einen Drehpunkt zu schwenken,
insbesondere dadurch, dass der Drehpunkt auf der Mittelachse (100) ausserhalb des ersten Andockelements (1) in Richtung des zweiten Andockelements (2) angeordnet ist, so dass das zweite Andockelement (2) an das erste Andockelement (1) ausserhalb des ersten Andockelements (1) andocken kann.

9. Erstes Andockelement (1) nach einem der Ansprüche 5 bis 8, umfassend ein erstes zentrales elektrisches Kontaktteil (103), das an der tiefsten Stelle der konkaven Oberfläche (11) integriert ist,
insbesondere ist das erste mittlere elektrische Kontaktteil (103) geeignet, sich mit einem zweiten elektrischen Kontaktteil (203) des zweiten Andockelements (2) zu verbinden, wenn das erste Andockelement (1) an das zweite Andockelement (2) andockt.

10. Zweites Andockelement (2) für die Andockanordnung (1000) nach einem der Ansprüche 1 oder 4.

11. Zweites Andockelement (2) nach Anspruch 10, umfassend
mindestens vier in die konvexe Oberfläche (21) integrierte elektrische Kontaktteile (201), und/oder
mindestens vier elektrische Kontaktteile (202), die in die zweite Oberfläche (22) integriert sind.

12. Zweites Andockelement (2) nach einem der Ansprüche 10 bis 11, umfassend ein zweites mittleres elektrisches Kontaktteil (203), das an der obersten Stelle der konvexen Oberfläche (21) integriert ist,
insbesondere ist das zweite mittlere elektrische Kontaktteil (203) geeignet, mit einem ersten mittleren elektrischen Kontaktteil (103) des ersten Andockelements (1) verbunden zu werden, wenn das zweite Andockelement (2) an das erste Andockelement (1) andockt.

13. Elastisches Element (3) für die Andockvorrichtung nach Anspruch 3 mit mindestens drei Rohrsegmenten (31),
wobei jedes Rohrsegment (31) mit zwei anderen Rohrsegmenten (31) durch eine Brücke (32) verbunden ist, um eine ringförmige Struktur zu bilden,
wobei sich die Mittelachsen (301) jedes der mindestens drei Rohrsegmente (31) mit einer Achse (300) der ringförmigen Struktur an einem Punkt ausserhalb der ringförmigen Struktur kreuzen.

14. Elastisches Element (3) nach Anspruch 13 mit vier Rohrsegmenten (31).

15. Verfahren zum Andocken eines ersten Andockelements (1) nach einem der Ansprüche 5 bis 9 an ein zweites Andockelement (2) nach einem der Ansprüche 10 bis 12 zum Laden einer Batterie eines elektronischen Geräts, insbesondere eines Roboters,
wobei das erste Andockelement (1) ein Andockport und das zweite Andockelement (2) eine in das elektronische Gerät integrierte Andockbuchse ist,
oder vice versa,
wobei das Verfahren die folgenden Schritte umfasst
- Erfassen des Andockports mit einer Kamera des elektronischen Geräts,
- Schätzen der Pose zur Positionierung des elektronischen Geräts, so dass es mit der Andockbuchse an den Andockport andockt, und
- Steuern der elektronischen Vorrichtung, um die Position zum Andocken an die Andockbuchse an den Andockport einzunehmen.

## Revendications

1. Agencement d'amarrage (1000) pour charger une batterie d'un appareil électronique, en particulier un robot, comprenant un premier élément d'amarrage (1) et un deuxième élément d'amarrage (2),
dans lequel, lorsque le premier élément d'amarrage (1) s'accole au deuxième élément d'amarrage (2),
- un évidement concave du premier élément d'amarrage (1) est configuré de telle sorte qu'il s'adapte positivement dans une saillie convexe du deuxième élément d'amarrage (2) dans une direction d'un axe central (100) de l'évidement concave,
- au moins une partie de contact électrique (101) intégrée dans une surface concave (11) de l'évidement concave est connectée électriquement à au moins une partie de contact électrique (201) intégrée dans une surface convexe (21) de la saillie convexe, l'ensemble d'amarrage étant **caractérisé en ce que**
- une deuxième surface (12) du premier élément d'amarrage (1) est séparée de la surface concave (11) au moyen d'un bord (110) entourant l'évidement concave et est configurée pour s'adapter de manière positive à une deuxième surface (22) du deuxième élément d'amarrage (2) dans une direction de l'axe central (100),
- au moins une partie de contact électrique (102) intégrée dans la deuxième surface (12) du premier élément d'amarrage (1) est connectée électriquement à au moins une partie de contact électrique (202) intégrée dans la deuxième surface (22) du deuxième élément d'amarrage (2), et
dans lequel le premier élément d'amarrage (1) comprend un élément élastique (3) avec une géométrie configurée pour faire pivoter l'évidement concave autour d'un point de pivotement de telle sorte que le deuxième élément d'amarrage (2) puisse s'accoster au premier élément (1) avec un angle a par rapport à l'axe central (100) afin de compenser le défaut d'alignement du deuxième élément d'amarrage (2).

2. L'agencement d'amarrage (1000) selon la revendication 1, dans lequel
- le premier élément d'amarrage (1) est un port d'amarrage comprenant une alimentation électrique (111) et configuré pour charger la batterie du dispositif électronique lorsqu'une prise d'amarrage est accolée au port d'amarrage,
- le deuxième élément d'amarrage (1) est une prise d'amarrage adaptée pour être intégrée dans l'appareil électronique afin de charger la batterie lorsque la prise d'amarrage est accostée au port d'amarrage.

3. L'agencement d'amarrage (1000) selon l'une quelconque des revendications précédentes, dans lequel l'angle a est de 20° ≥ a ≥ -20°.

4. L'agencement d'amarrage (1000) selon l'une quelconque des revendications précédentes, dans lequel
- la au moins une partie de contact électrique (101) de la surface concave (11) et la partie de contact électrique (201) de la surface convexe (21) sont des contacts électriques de puissance, et/ou
- la au moins une partie de contact électrique (102) de la deuxième surface (12) du premier élément d'amarrage (1) et la au moins une partie de contact électrique (202) de la deuxième surface (22) du deuxième élément d'amarrage (2) sont des contacts de terre, et/ou
- une première partie centrale de contact électrique (103), qui est intégrée dans la partie la plus basse de la surface concave (11), peut être reliée à une deuxième partie centrale de contact électrique (203), qui est intégrée dans la partie la plus haute de la surface convexe (21), la première (103) et la deuxième (203) parties centrales de contact électrique étant des contacts de signal électrique et/ou étant adaptées pour détecter un contact entre le premier et le deuxième élément d'amarrage.

5. Premier élément d'amarrage (1) pour l'agencement d'amarrage (1000) selon la revendication 1 ou 2.

6. Le premier élément d'amarrage selon la revendication 5, dans lequel une partie de contact électrique (101) intégrée dans la surface concave (11) est conçue pour être reliée électriquement à au moins deux des parties de contact électrique (201) intégrées dans la surface convexe (21) lorsque le premier élément d'amarrage (1) est accosté au deuxième élément d'amarrage (2),
dans lequel, en particulier, la au moins une partie de contact électrique (101) intégrée dans la surface concave (11) s'étend sur une zone de la surface concave pour former une électrode annulaire.

7. Le premier élément d'amarrage (1) selon la revendication 5 ou 6, dans lequel l'au moins une partie de contact électrique (102) intégrée dans la deuxième surface (12) du premier élément d'amarrage (1) et entourant le bord (110) est apte à être reliée électriquement à chacune des au moins une partie de contact électrique (202) intégrée dans la deuxième surface (21) du deuxième élément d'amarrage (2) lorsque le premier élément d'amarrage (1) est accosté au deuxième élément d'amarrage (2).

8. Le premier élément d'amarrage (1) selon l'une des revendications 5 à 7, comprenant un élément élastique (3) ayant une géométrie adaptée pour faire pivoter l'évidement concave autour d'un point de pivotement,
notamment dans lequel le point de pivotement est situé sur l'axe central (100) à l'extérieur du premier élément d'amarrage (1) en direction du deuxième élément d'amarrage (2), de sorte que le deuxième élément d'amarrage (2) peut s'accoster sur le premier élément d'amarrage (1) à l'extérieur du premier élément d'amarrage (1).

9. Le premier élément d'amarrage (1) selon l'une quelconque des revendications 5 à 8, comprenant une première partie centrale de contact électrique (103) intégrée à l'endroit le plus bas de la surface concave (11),
notamment dans lequel la première partie centrale de contact électrique (103) est apte à se connecter à une deuxième partie de contact électrique (203) du deuxième élément d'amarrage (2) lorsque le premier élément d'amarrage (1) est accosté au deuxième élément d'amarrage (2).

10. Deuxième élément d'amarrage (2) pour l'agencement d'amarrage (1000) selon l'une des revendications 1 ou 4.

11. Le deuxième élément d'amarrage (2) selon la revendication 10, comprenant
au moins quatre pièces de contact électrique (201) intégrées dans la surface convexe (21), et/ou
au moins quatre pièces de contact électrique (202) intégrées dans la deuxième surface (22).

12. Le deuxième élément d'amarrage (2) selon l'une des revendications 10 à 11, comprenant une deuxième partie centrale de contact électrique (203) intégrée à l'endroit le plus haut de la surface convexe (21),
notamment dans lequel la deuxième partie centrale de contact électrique (203) est apte à être connectée à une première partie centrale de contact électrique (103) du premier élément d'amarrage (1) lorsque le deuxième élément d'amarrage (2) est accosté au premier élément d'amarrage (1).

13. Élément élastique (3) pour l'agencement d'amarrage selon la revendication 3, comprenant au moins trois segments de tube (31),
chaque segment de tube (31) étant relié à deux autres segments de tube (31) par un pont (32) afin de former une structure annulaire,
dans lequel les axes centraux (301) de chacun des au moins trois segments de tube (31) se croisent avec un axe (300) de la structure annulaire en un point extérieur à la structure annulaire.

14. Élément élastique (3) selon la revendication 13, comprenant quatre segments de tube (31).

15. Procédé d'amarrage d'un premier élément d'amarrage (1) selon l'une des revendications 5 à 9 à un deuxième élément d'amarrage (2) selon l'une des revendications 10 à 12 pour charger une batterie d'un appareil électronique, notamment un robot,
le premier élément d'amarrage (1) étant un port d'amarrage et le deuxième élément d'amarrage (2) étant une prise d'amarrage intégrée à l'appareil électronique,
ou vice versa,
le procédé comprenant les étapes suivantes
- détecter le port d'amarrage avec une caméra du dispositif électronique,
- estimer la pose pour positionner le dispositif électronique de manière à ce qu'il s'amarre au port d'amarrage avec le port d'amarrage, et
- commander le dispositif électronique pour qu'il prenne la position d'amarrage avec la douille d'amarrage au port d'amarrage.
